# EUROPEAN PATENT SPECIFICATION

(11) **EP 2 467 998 B1**
(45) Date of publication and mention of the grant of the patent: **04.10.2017**
(21) Application number: 10742969.8
(22) Date of filing: 05.08.2010
(51) Int. Cl.: H04M 7/00, H04M 3/42

(54) **MIDCALL FALLBACK FOR VOICE OVER INTERNET PROTOCOL (VOIP) CALLS**
RÜCKFALL WÄHREND DES GESPRÄCHS FÜR VOIP-ANRUFE
REPRISE À MI-APPEL POUR DES APPELS PAR PROTOCOLE DE VOIX SUR IP (VOIP)

(30) Priority: 21.08.2009 US 545617
(43) Date of publication of application: 27.06.2012
(73) Proprietor: Cisco Technology, Inc., San Jose, CA 95134 (US)
(72) Inventor: ROSENBERG, Jonathan, Freehold NJ 07728 (US); BAO, Ho, Richardson TX 75082 (US)
(74) Representative: Kazi, Ilya
(86) International application number: PCT/US2010/044487
(87) International publication number: WO 2011/022214

(56) References cited:
- WO-A1-00/69156
- GB-A- 2 431 317
- US-A1- 2003 091 024
- US-B1- 6 781 983

## Description

### TECHNICAL FIELD

The present disclosure relates generally to Voice over Internet Protocol.

### BACKGROUND

A Voice over Internet Protocol (VoIP) call is a phone call established over the Internet. An Internet connection may connect a caller and callee. The Internet connection may be used to exchange information or data, such as a conversation between the caller and callee. The Internet connection may vary in quality and/or over time. For example, the quality of the Internet connection may be satisfactory when the VoIP call is established, however, may worsen as the VoIP call progresses. As the quality of Internet connection deteriorates, the conversation may be disrupted because of delays, gaps, or packet loss across the Internet.

US 2003/091024 discloses VoIP private network call rerouting or switching.

Aspects of the invention are recited in the independent claims, and preferred features are recited in the dependent claims.

### BRIEF DESCRIPTION OF THE DRAWINGS

The components and the figures are not necessarily to scale, emphasis instead being placed upon illustrating the principles of the invention. Moreover, in the figures, like-referenced numerals designate corresponding parts throughout the different views.
Figure 1 illustrates one embodiment of a Voice over Internet Protocol (VoIP) system;
Figure 2 illustrates one embodiment of a method for performing midcall fallback; and
Figure 3 illustrates one embodiment of a call flow for midcall fallback.

### DESCRIPTION

The present embodiments relate to midcall fallback for Voice over Internet Protocol (VoIP) calls. As used herein, "midcall fallback" may include switching, re-routing, or transferring the call from an Internet Protocol (IP) network to a public switched telephone network (PSTN) during the middle of a VoIP call. As used herein, the "middle of the VoIP call" may include the portion of the VoIP call after the VoIP call is established across the IP network and before the VoIP call is terminated. Midcall fallback may include establishing a call across a PSTN and terminating the VoIP call. Accordingly, a caller and callee may continue the conversation using the PSTN. Midcall fallback may be performed based on quality of the connection across the IP network. For example, midcall fallback may be performed when the quality of connection deteriorates to a predetermined quality threshold. Once midcall fallback is performed, the user's conversation will not be disrupted because of delays, gaps, or packet loss across the Internet.

The midcall fallback may be secure. Midcall fallback may include validating a PSTN call setup message used to setup the PSTN call. Validating the PSTN call setup message may include comparing a calling party number (CGPN) to a direct inward dialing (DID) number. A call agent, which is performing the validation, may receive the CGPN in the PSTN call setup message and the DID number in an IP call setup message. The DID number may be randomly selected from a list of DID numbers assigned to a call agent initiating the VoIP call. The PSTN call setup message may be validated when the CGPN number matches the DID number.

In one aspect, a method for performing midcall fallback is provided. The method may be performed before, during, and/or after a VoIP call is established and may be performed by a first call agent. The method includes assigning a direct inward dialing (DID) number to a first client. The DID number may be selected, for example, randomly, from a list of direct inward dialing numbers. The first call agent may be operable to send a first setup message to establish the VoIP call between the first client and a second client. The first setup message may include the DID number. In response to the first setup message, the call agent may receive an answer message including a dial sequence identifying a second call agent serving the second client. The dial sequence may define a phone number to be dialed to reach the second call agent serving the second client. The first call agent may monitor a connection over which the VoIP phone call is connected to determine whether to perform midcall fall back. Finally, the first call agent may perform midcall fall back. Midcall fallback may include establishing a public switched telephone network (PSTN) phone call between the first client and the second client.

In a second aspect, a call agent is provided. The call agent includes a processor operable to execute instructions; and a memory coupled with the processor. The memory may be configured to store instructions that may be executed to receive, during establishment of a voice over Internet Protocol (VoIP) call, a first setup message having a first identification number assigned to a client; receive, in response to VoIP connection monitoring, a second setup message including a calling party number; and validate the second setup message using the first identification number and the calling party number.

In a third aspect, logic encoded in one or more tangible media for execution is provided. When executed, the logic is operable to assign an identification number to a first client, the identification number being selected from a list of identification numbers; establish a voice over Internet protocol (VoIP) call between the first client and a second client using a first setup message, the first setup message including the identification number; monitor an Internet connection over which the VoIP phone call is connected; and perform midcall fall back in response to a result of the monitoring, midcall fallback including establishing a public switched telephone network (PSTN) call between the first client and the second client to replace the VoIP call.

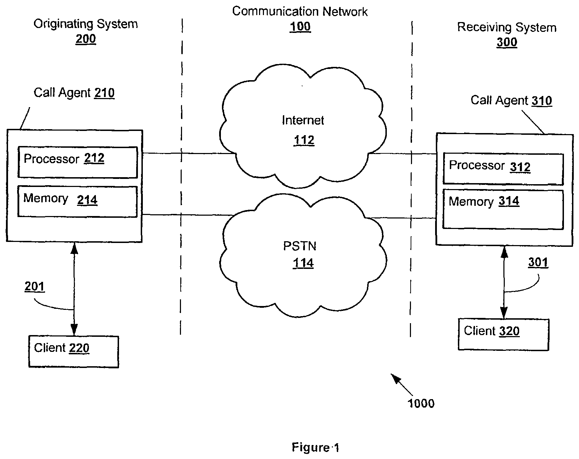

Figure 1 illustrates a phone system 1000. The system may include a communication network 100, an originating system 200, and a receiving system 300. The communication network 100 couples the originating system 200 with the receiving system 300. The originating system 200 and receiving system 300 are operable to use the communication network 300 to communicate with each other. The originating system 200 and receiving system 300 are operable to transmit and/or receive data, signals, or other information. As used herein, the phrases "coupled with" and "couples... with" include directly connected or indirectly connected through one or more intermediary components. Intermediary components may include hardware components, software components, or both hardware and software components. Additional, different, or fewer components may be provided in the system 1000.

A phone call is a connection over the communication network 100 between the originating system 200 and the receiving system 300. The connection may be used to exchange data, such as audio data, video data, still image data, text data, or other data related to phone calls. The phone call may be established, maintained, and/or released across communication network 100. Although referred to herein as a phone call, the connection over the communication network 100 may be referred to as a telephone call, Voice over Internet Protocol (VoIP) call, call, or IP telephony call.

The communication network 100 may include one or more networks for supporting the phone call. Supporting a phone call may include establishing, maintaining, and/or releasing the phone call. Establishing the phone call may include setting up the phone call. Setting up the phone call may include initiating and/or accepting the phone call. Maintaining the phone call may include continuously maintaining the connection without substantial breaks in the connection. Substantial provides for PSTN multiplexing or other breaks not or barely noticeable by a caller or callee. Releasing the phone call may include terminating or dropping the phone call.

The communication network 100 may include the Internet 112 and/or a PSTN 114. The Internet 112 is a global network of interconnected computers, enabling users to share information along multiple channels. The movement of data across the Internet 112 is achieved via a system of interconnected computer networks that share data by packet switching using the standardized transmission control protocol (TCP)/ Internet Protocol (IP). The Internet 112 may include private and public, academic, business, and government networks of local to global scope that are linked by copper wires, fiber-optic cables, wireless connections, and other technologies.The PSTN 114 is a circuit-switched network comprising all or a subset of the world's public circuit-switched telephone networks. The PSTN 114 may include partial fixed-line analog telephone systems, and partial digital telephone systems, as well as mobile telephone systems or military telephone systems. An advantage of utilizing the PSTN 114 is that it may operatively connect many enterprises in the world that have PSTN connectivity and possibly caller ID and connected party ID.

A phone call may be placed over the Internet 112, for example, as a VoIP call. Alternatively, or additionally, a phone call may be placed over the PSTN 114, for example, as a plain old telephone call. Additional, different, or fewer communication networks may be used for supporting a phone call. For example, cellular networks, military telephone networks, or private enterprise networks may be used. The Internet 112 and PSTN 114 may be in the same communication network 100 or different communication networks.

The originating system 200 may include a call agent 210 and a client 220. The originating system 200 is operable to setup a phone call across the Internet 112 and/or PSTN 114. For example, the originating system 200 may be used to initiate, place, or make a phone call. As used herein, the term "originating" relates to the location or system associated with the caller. Additional, different, or fewer components may be provided in the originating system 200. For example, the system 200 may include a PSTN gateway that is coupled with and/or between the call agent 210 and the PSTN 114. The PSTN gateway may be used for setting up and maintaining a phone call over the PSTN.

The receiving system 300 may include a call agent 310 and a client 320. The receiving system 300 may be operable to accept a phone call placed from the originating system 200. The phone call may be received across the Internet 112 and/or PSTN 114. As used herein, "receiving" relates to the location or system associated with the callee. The receiving system 300 may include additional, different, or fewer components. For example, the receiving system 300 may include a PSTN gateway configured to establish, accept, or maintain PSTN calls.

Alternatively, or additionally, the originating system 200 is operable to perform the acts and functions of the receiving system 300 and the receiving system 300 is operable to perform the acts and functions of the originating system 300. For example, client 220 may be used to place a phone call to client 320. After the phone call is terminated, the client 320 may place a phone call to client 220.

The call agents 210, 310 may be Internet Protocol (IP)- private branch exchange (PBX) hosting call manager applications, such as Cisco Call Manager (CCM), nodes hosting VoIP call manager functions, IP to IP gateways, such as a Session Border Controller (SBC) or Back-to-Back User Agent (B2BUA) connected to an existing TDM PBX, IP PBXs, voice or voice over IP equipment, personal computers, gateways, firewalls, servers, routers, border routers at the edge or near the edge of the IP network 310, a combination thereof, or any other device for supporting IP or PSTN phone calls. The call agents 210, 310 may provide IP-based interconnectivity for unified communication between enterprises, such as the originating system 200 and receiving system 300. The call agents 210, 310 are operable to perform the processes described, including making and receiving PSTN and VoIP calls and performing middle of the call fallback.

The call agents 210, 310 may include processors 212, 312 and memories 214, 314. The call agents 210, 310 may include additional, different, or fewer components. The processors 212, 312 are operable to perform the acts and/or functions described with respect to the call agent 210. The processors 212, 312 may be coupled with and communicate with the memory 214, 314. For example, the processors 212, 312 may read instructions stored on the memory 214, 314 and execute the instructions.

The processors 212, 312 may be general processors, digital signal processors, application specific integrated circuits, field programmable gate arrays, servers, analog circuits, digital circuits, combinations thereof, or other now known or later developed processors. The processors 212, 312 may be single devices or a combination of devices, such as associated with a network or distributed processing. Any of various processing strategies may be used, such as multi-processing, multitasking, parallel processing, or the like. Processing may be local, as opposed to remote. The processors 212, 312 are responsive to instructions stored as part of software, hardware, integrated circuits, firmware, micro-code or the like.

The memories 214, 314 are computer readable storage media. The computer readable storage media may include various types of volatile and nonvolatile storage media, including but not limited to random access memory, read-only memory, programmable read-only memory, electrically programmable read-only memory, electrically erasable read-only memory, flash memory, magnetic tape or disk, optical media and the like. The memories 214, 314 may be a single device or a combination of devices. The memories 214, 314 may be adjacent to, part of, networked with and/or remote from the processors 212, 312.

The memories 214, 314 may store data representing instructions executable by the programmed processors 212, 312. The processors 212, 312 are programmed with and execute the instructions. The functions, processes, acts, methods or tasks illustrated in the figures or described herein are performed by the programmed processors 212, 312 executing the instructions stored in the memories 214, 314. The functions, acts, processes, methods or tasks are independent of the particular type of instructions set, storage media, processor or processing strategy and may be performed by software, hardware, integrated circuits, firm ware, micro-code and the like, operating alone or in combination. Logic encoded in one or more tangible media for execution is defined as the instructions that are executable by the programmed processor and that are provided on the computer-readable storage media, memories, or a combination thereof.

The call agent 210 may be in communication with the client 220. The call agent 310 may be in communication with the client 320. The clients 220, 320 may be analog phones, personal computers, VoIP phone, IP telephony phone, phones designed to operate on a line that is in communication with the Internet 112, phones designed to operate on a Plain Old Telephone Service (POTS) line that is in communication with the PSTN 114, or a combination thereof. In one example, the client 220 is a VoIP phone and the client 320 is a personal computer. The clients 220, 320 may be operable to accept user input, generate a digit sequence from the user input, and/or transmit the digit sequence to the call agents 210, 310. Alternatively, or additionally, the call agents 210, 310 may include an input device for receiving user input. The user input may be used to generate a digit sequence. A user may dial any digit sequence by selectively pressing buttons on the clients 220, 320.

A user, such as a human-being or an electronic device, may input a caller number using the client 220. The client 220 may include an input device, such as a numerical keypad, alphabetic keypad, keyboard, mouse, monitor, touchpad, microphone, or other device for inputting a dial sequence. Accordingly, inputting the callee number may include selecting, dialing, saying (e.g., verbalizing), or otherwise defining. For example, the user (e.g., caller) may use, operate, or engage the input device to input the callee number. Before, at the same time as, or after the callee number is input into the client 220, for example, using the input device, the client 220 may transmit the callee number to the call agent 210 across network 201.

The callee number may be one or more digits entered by a user to initiate a phone call. The callee number may represent an address or phone number for the client 320. The address or phone number may be used to place a phone call to the client 320 over the Internet 112 or PSTN 114. The address or phone number address may be an IP address, VoIP address, PSTN phone number, or other address or number for reaching the client 320. The IP address may be assigned to the client 320. For example, a user may use the client 220 to input the callee number "4085551234," which may correspond to the phone number for client 320.

The call agent 210 may receive a callee number and initiate setup of a phone call with the client 320. Setting up a phone call may include performing phone call setup, fallback setup, or a combination thereof. Fallback setup may be performed before, during, or after phone call setup. Fallback setup may be a part of or independent of phone call setup

Phone call setup may include establishing a VoIP call between the client 220 and the client 320 across the Internet 112 or other IP-based computer network. Establishing a VoIP call may include initiating a VoIP call. Initiating the VoIP call may include sending an IP call setup message that defines a start time, the callee number, the caller number, a protocol to be used during the VoIP call, the number of packets involved in the call, the current call state, or any combination thereof. The message may be a VoIP call setup message. The VoIP call setup message may be transmitted to an address defined by the callee number or, alternatively, a number or address associated with the callee number, such as a number or address for a call agent 310 serving the client 320.

The call agent 210 may employ session control protocols to control the setup and teardown of VoIP calls. The call setup stage of the call requires protocols that enable dial tone, number lookup, ringing, and busy signals before the call even occurs. In addition, the call setup protocols may be used after the call, such as resource cleanup and statistical reporting.

Call setup protocols may use the Transmission Control Protocol (TCP) or User Datagram Protocol (UDP) to transfer data during the setup and takedown phases of a telephone call. Each protocol uses a port or ports to communicate with a call server, which functions like a private branch exchange (PBX) to enable IP phone calls. The required setup messages are sent back and forth between the call agent 210, call agent 310, client 220, and/or client 330. For calls that travel between the Internet 112 and the PSTN 114, the call agents 210, 310 may converse with a voice gateway using the same call setup protocol.

The VoIP call setup messages, which vary in size and number, handle functions like the mapping of phone numbers to IP addresses, generating dial tones and busy signals, ringing the called party, and hanging up. Many different call setup protocols are in current use for VoIP deployments; some are standardized and some proprietary.

Exemplary call setup protocols include the H.323 protocol, the Media Gateway Control Protocol (MGCP), the session initiation protocol (SIP), and other proprietary protocols. Other now known or later developed protocols may be used. The call setup protocol H.323 is standardized by the International Telecommunications Union (ITU). In a VoIP environment, H.323 is a common protocol running on voice gateways to connect the VoIP network to the PSTN. H.323 is a family of telephony-based standards for multimedia, including voice and videoconferencing. The H.323 protocol may include one or more handshakes and data exchanges for each function performed. Because H.323 uses TCP for communication, setting up a call with H.323 can require many back-and-forth TCP flows.

The Media Gateway Control Protocol (MGCP) is another call setup protocol. MGCP differs from some other call setup protocols in that the call agents 210, 310, or clients 220, 320, do not use MGCP to control the phone call. MGCP is used so that a call agent 210, 310 can control a voice gateway connection to the PSTN 114. The MGCP may be used to send messages between the call agents 210, 310 and gateways over UDP port 2427. Because the call agent 210, 310 controls a gateway, the bulk of the call control intelligence resides in the call agent 210, 310. Call routing information is configured in the call agent 210, 310 instead of in the gateway.

The Session Initiation Protocol (SIP) is a signaling protocol that may be used for setting up and tearing down multimedia communication sessions such as voice and video calls over the Internet. Additionally, SIP may be used for video conferencing, streaming multimedia distribution, instant messaging, presence information and online games. The protocol can be used for creating, modifying and terminating two-party or multipart sessions consisting of one or several media streams. The modification can involve changing addresses or ports, inviting more participants, adding or deleting media streams. The SIP protocol is a transmission control protocol (TCP)/ Internet protocol (IP)-based Application Layer protocol. Within the Open Systems Interconnection Reference (OSI) model SIP is sometimes placed in the session layer. SIP is designed to be independent of the underlying transport layer; it can run on TCP, user datagram protocol (UDP), or Stream Control Transmission Protocol (SCTP). SIP is a text-based protocol, sharing many elements of the Hypertext Transfer Protocol (HTTP), upon which it is based, allowing for easy inspection by administrators.

In addition to the standardized call setup protocols discussed above, certain vendors have provided their own proprietary protocols. One popular example is the Cisco Skinny Client Control Protocol (SCCP). SCCP or "Skinny" provides a simple, lightweight call setup protocol for Cisco devices. Skinny passes messages using TCP and port 2000. However, the protocols discussed here (H.323, MGCP, SIP, and SCCP) are all commonly used in VoIP equipment.

In one embodiment, the call agent 210 is operable to use one or more audio codecs to encode speech allowing transmission over an IP network as digital audio via an audio stream. Codecs vary between different implementations of VoIP. A range of codecs may be used. Certain implementations rely on narrowband and compressed speech, while others support high fidelity stereo codecs.

The call agent 210 may selectively establish a phone call either over the Internet 112 or PSTN 114. The call agent 210 may select either the Internet 112 or PSTN 114 based on the dial sequence transmitted from the client 220. For example, the Internet 112 may be used when an IP address is provided from the client 220. The PSTN 114 may be used when a PSTN phone number is provided. In one example, the call is connected across the Internet 112 and is re-routed to the PSTN 114 during the middle of the call. The call agent 210 may be operable to initiate and maintain calls over one or both of the Internet 210 and PSTN 114.

In one embodiment, phone call set up may include storing the call details of the phone call and the callee number in the memory 214. For example, the call agent 210 may store the callee number "+4085551234" and the start time and end time of the corresponding call.

Fallback setup may include selecting a direct inward dialing (DID) number from a block or list of DID numbers assigned to the call agent 210. Direct inward dialing (DID), also called Direct Dial-In (DDI) in Europe and Australia, is a feature offered by telephone companies for use with the telephone companies customers' private branch exchange (PBX) systems. The telephone company allocates a range of numbers all connected to their customer's PBX. As calls are presented to the PBX, the number that the caller dialed is also given, so the PBX can route the call to the desired person or bureau within the organization. The DID number allows companies to have fewer lines than extensions, while still having a unique number for each extension, callable from outside the company.

United States' DID numbers can be purchased in bulk from a Competitive Local Exchange Carrier. International DID numbers can be purchased in bulk from international DID providers. A number of DID resellers also offer DID numbers for individuals and small enterprises.

DID numbers may be used for VoIP calls. In order for people connected to the PSTN 114 to call other people connected to the Internet 112, DID numbers from the PSTN 114 are obtained by the administrators of the Internet 112, and assigned to a call agent 210, 310 connected to the Internet 112. The call agent 210, 310 then routes calls incoming from the PSTN 112 across the IP network to the appropriate client 210, 310. Similarly, calls originating in the VoIP network will appear to users on the PSTN 114 as originating from one of the assigned DID numbers.

The call agent 210 may be operable to select a direct inward dialing (DID) number from a block or list of DID numbers assigned to the call agent 210. Selection may be random, predetermined, dynamic, based on client 220 information, or a combination thereof. For example, the DID number may be a randomly selected DID number from a DID-range assigned to the call agent 210. The DID-range may be stored in memory 214. The processor 212 may be operable to read the DID-range and randomly select a DID number from the DID-range. One benefit of a randomly selected DID is that it may not be easily guessed or replicated. As a result, the DID number may be a secure and/or secret key or identifier that identifies the client 220. In another example, the call agent 210 may randomly select the DID number and then compare the DID number to DID numbers previously selected for the client 220. When the selected DID number is the same as a previously selected DID number, the call agent 210 may randomly select another DID number.

In one example, which will be referred to herein as "the example above," a DID-range may include the following DID numbers: 1234567890, 1234567891, 1234567892, and 1234567893. Additional, different, or fewer DID numbers may be included in the DID-range. During a first phone call, for example, to a friend in Richardson, Texas, the call agent 210 may randomly select a first DID number, such as 1234567892, for the client 220. During a second phone call, for example, to a business partner in San Jose, California, the call agent 210 may randomly select a second DID number, such as 1234567890, for the client 220. Although shown as different DID numbers in this example, the first DID number may be the same as or different than the second DID number. Most likely, the first DID number will be different than the second DID number because the first and second DID numbers are randomly selected. However, it is possible for the first DID number to be the same as the second DID number, even when selected randomly. Although shown as a ten-digit DID number, other DID numbers may be used, such as phone numbers, addresses, representations, or other sequences of number, letters, and/or symbols.

After selecting the DID number, the call agent 210 may assign the DID number to the client 220. Once assigned, the DID number may not be assigned to other clients until after the phone call is completed. Since the call agent 210 may support multiple clients, the DID number may be used to identify a client. The DID number provides a way of uniquely identifying the clients. In the example above, the call agent 210 may assign DID number 1234567892 to the client 210 during the phone call to Richardson, Texas. Should a second client transmit a callee number to the call agent 210 while DID number 1234567892 is assigned to the client 210, a second DID number may be selected and assigned to the second client. The second DID number may be selected from the DID-range including the DID numbers 1234567890, 1234567891, and 1234567893. The second DID number may not be the DID number 1234567892 until the phone call to Richardson, Texas is completed.

The DID number assignments may be stored in memory 214. The DID number assignments may be associations, relationships, or other ways to match a DID number with a client. For example, in the example above, DID number 1234567892 may be associated with client 220 and DID number 1234567890 may be associated with the second client.

The call agent 210 may include the callee number, caller number, and/or the assigned DID number in an IP call setup message transmitted from the call agent 210 to the call agent 310 across the Internet 112.

The call agent 210 may establish a VoIP call across the Internet 112. Establishing the VoIP call may include receiving, in response to the IP call setup message, an answer message from the call agent 310. The answer message may include a dial sequence and/or a dual-tone multi-frequency (DTMF) sequence. The dial sequence may define a phone number for contacting the call agent 310. The dial sequence may be a DID number. The call agent 310 may select the DID number from a list of assigned DID numbers. Selection may be random or predetermined. The DTMF sequence may be used to validate a PSTN phone call in the event that the original DID number is unable to be used to validate the PSTN phone call.

The call agents 210 and 310 are operable to maintain a VoIP call across the Internet 112. Maintaining the VoIP call may include supporting a conversation portion of the VoIP call. Supporting the conversation portion may include converting from analog to digital, translating into packets, sending across the Internet 112 in packet format, reassembling, converting from digital back to analog, or any combination thereof. Conversation media may include video data, audio data, text data, still picture data, and/or other data. During the conversation portion, the conversation media may be streamed or transmitted across the Internet 112. A number of different components, standards, and protocols are used to enable the traffic to travel across the Internet 112.

In one embodiment, the real time protocol (RTP) may be used for streaming the conversation media. The real time protocol RTP may be used to send data in one direction with no acknowledgments; and thus, is referred to as real time. Since a VoIP call is bidirectional, for example, from client 220 to client 320, two or more RTP streams may carry the conversation, one in each direction. The path that these RTP streams take through the Internet 112 and the impairments encountered along the way may be used to determine the quality of voice conversations carried over data networks. RTP is an application protocol that uses UDP for transport. All the fields related to RTP are enclosed within the UDP payload. Like UDP, RTP is a connectionless protocol.

In alternative embodiments, other now known or later developed protocols, such as proprietary protocols or other streaming protocols, may be used for streaming the conversation media. In one example, Skype uses proprietary protocols for streaming media across a peer-to-peer network, which is known as the Skype network. In another example, the RTP may be used with the RTP Control Protocol (RTCP). The RTP may be used to carry the conversation media (e.g., audio and video) or out-of-band signaling (e.g., DTMF), the RTCP may be used to monitor transmission statistics and quality of service (QoS) information. When both protocols are used together, data transmitted using the RTP is usually originated and received on even port numbers, whereas data transmitted using the RTCP may use the next higher odd port number.

The call agent 210 is operable to monitor an IP phone call across the Internet 112. Monitoring an IP phone call may include monitoring an Internet connection between the call agent 210 and the call agent 310. Monitoring an Internet connection may include monitoring efficiency, speed, capabilities, or progress of one, some, or all of the channels, devices, or other network devices making up the Internet connection.

The call agent 210 is operable to determine whether to perform midcall fallback. Midcall fallback may be performed based on connection quality, quality of service (QoS) criteria, user preference, re-routing information, or a combination thereof.

In one embodiment, midcall fallback is performed based on a connection quality. The connection quality may relate to bandwidth, VoIP quality, network route performance, and/or video quality. A connection quality requirement may be defined. The connection quality requirement may be predetermined or dynamically chosen. The connection quality requirement may define a maximum or minimum connection quality value. For example, a minimum bandwidth requirement may be predetermined. The minimum bandwidth requirement may define a minimum bandwidth capacity, available bandwidth, or consumed bandwidth. The call agent may monitor the Internet connection to determine or measure an actual connection quality value. The actual connection quality value may be compared to the connection quality requirement. Depending on the connection quality requirement, the call agent may perform midcall fallback when the actual connection quality is equal to, greater than, or less than the connection quality requirement.

In another embodiment, midcall fallback is performed based on quality of service (QoS) guarantee. In the field of computer networking and other packet-switched telecommunication networks, a quality of service guarantee may be used to guarantee a certain level of performance to a data flow. For example, a required bit rate, delay, jitter, packet dropping probability and/or bit error rate may be guaranteed. Quality of service guarantees are important if the network capacity is insufficient, especially for real-time streaming multimedia applications, such as VoIP calls, since these often require fixed bit rate and are delay sensitive. QoS guarantee may be agreed on in a traffic contract for the application software and reserve capacity in the network nodes, for example, during a session establishment phase or setup phase. During the VoIP phone call, the call agents 210, 310 may monitor the achieved level of performance, for example, the data rate and delay, and dynamically control midcall fall back.

Exemplary Quality of Service (QoS) guarantees are described below.

### Dropped Packets

The call agents 210, 310 may fail to deliver some packets. The packets arrive when the call agent buffers are already full. Some, none, or all of the packets might be dropped, depending on the state of the network, and it is impossible to determine what will happen in advance. A dropped packet guarantee may define a number of acceptable dropped packets. The call agent 210 may monitor the number of dropped packets. If the number of dropped packet equals or exceeds the number of acceptable dropped packets, the call agent 210 may perform midcall fallback.

### Transmission Delay

A packet may take a long time to reach a call agent from another call agent, because the packet gets held up in long queues, or takes a less direct route to avoid congestion. An excessive delay guarantee may define an acceptable time for transmission from one call agent to another call agent. A call agent may monitor the actual time of transmission, for example, using a clock and/or time stamps. The call agent may perform midcall fallback when the actual time of transmission exceeds the excessive delay guarantee.

### Jitter

Packets from a source will reach the destination with different delays. A packet's delay varies with its position in the queues of the routers along the path between source and destination and this position can vary unpredictably. This variation in delay is known as jitter. A jitter guarantee may be provided. A call agent may monitor the actual jitter. The call agent may perform midcall fallback when the actual jitter exceeds the jitter guarantee.

### Out-of-order delivery

When a collection of related packets is routed through the Internet, different packets may take different routes, each resulting in a different delay. The result is that the packets arrive in a different order than they were sent. This problem requires special additional protocols responsible for rearranging out-of-order packets to an isochronous state once they reach their destination. Out-of-order delivery guarantee may define an acceptable number of out-of-order packets. The call agent may monitor and count the actual number of out of order packets. The call agent may perform midcall fallback when the actual number of out-of-order packets exceeds the out-of order delivery guarantee.

### Error

Sometimes packets are misdirected, or combined together, or corrupted, while being transmitted. An error guarantee may define a number of acceptable error packets. The call agent may monitor the number of packets that are misdirected, or combined together, or corrupted. The call agent may perform midcall fallback when the number of error packets exceeds the error guarantee.

In yet another embodiment, midcall fallback is performed based on user preference. A user may provide input that is used to initiate midcall fallback. The user may desire to switch to a PSTN. During the middle of the phone call, the user may provide input using the client 220. For example, the user may press "*10" during the middle of the call. The "*10" may be transmitted to the call agent 210. The call agent 210 may perform midcall fallback.

In yet another embodiment, midcall fallback is performed based on fallback information. Fallback information may include scheduled fallback information, past-usage information, usage information, user information, or other fallback related information. For example, the call agent 220 may store a schedule. The schedule may be an update schedule. The schedule may define the time of day that a server is updated. Updating the server may cause an interruption in the VoIP call. The call agent 210 may use the schedule information to perform fallback prior to the server update. Accordingly, the call will not be interrupted.

Once the call agent 210 determines that midcall fallback is needed, the call agent 210 is operable to perform midcall fallback. Performing midcall fallback may include switching, transferring, or re-routing the phone call from the Internet 112 to the PSTN 114. In order to perform midcall fallback, the call agent 210 initiates a phone call across the PSTN 114. Initiating the phone call across the PSTN 114 may include using the randomly selected DID number to establish a connection between the client 220 and client 320 across the PSTN 114 and/or using the DID number to validate the phone call. Initiating the phone call may include additional, different, or fewer acts or functions.

Establishing the connection may include transmitting a PSTN call setup message to the call agent 310. The PSTN call setup message may include a called party number (CDPN) and/or a calling party number (CGPN). The CGPN may be the assigned DID number or another known number. The CDPN may be the dial sequence received from the call agent 310.

The call agent 310 may validate the PSTN call setup message. Validating the PSTN call setup message may include validating the CGPN provided in the PSTN call setup message. Validating the CGPN may include comparing the CGPN provided to the call agent 310 when establishing the PSTN connection (e.g., the CGPN in the PSTN call setup message) to the DID number provided to the call agent 310 when establishing the IP connection for the IP phone call (e.g., the DID number in the IP call setup message). In the event that the DID numbers are the same as or match each other, the call agent 310 may connect the client 320 to the PSTN phone call and terminate the IP phone call. However, the call agent 310 may terminate the PSTN phone call when the DID numbers are not the same or do not match each other.

In order to connect the PSTN phone call to the client 320, call agent 210 may shuffle media by connecting client 220 to a PSTN-Gateway (PSTN-GW) connecting to PSTN 114. Likewise, call agent 310 may shuffle media by connecting client 320 to a PSTN-GW connecting to PSTN 114.

In an alternative embodiment, the call agent 210 may include a DTMF sequence received from the call agent 310 in the PSTN call setup message. The call agent 310 may be configured to validate the PSTN call setup message using the DTMF sequence transmitted from the call agent 210, for example, in the event that the DID numbers are not the same or do not match each other.

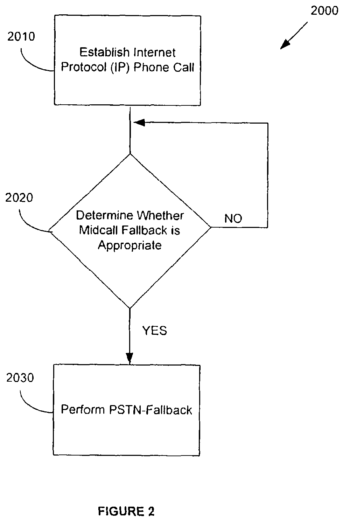

Figure 2 illustrates one embodiment of a method 2000 for performing midcall fallback. The acts shown in the method may be performed in the order shown or a different order. The system 1000 of Figure 1 may be used to execute all, some, or none of the method.

In act 2010, a first call agent sets up a Voice over Internet Protocol (VoIP) call. Setting up the VoIP call may include performing call setup and/or midcall fallback setup. Phone call setup may be performed before, at the same time as, or after the midcall fallback setup. Performing phone call setup may include initiating a phone call. Initiating a phone call may include sending an IP call setup message to a second call agent. The IP call setup message may define a start time, the callee number, the caller number, the protocol to be used during the call, the number of packets involved in the call, the current call state, a randomly assigned DID number, or any combination thereof. A randomly assigned DID number is a DID number that is randomly selected from a list of DID numbers assigned to the first call agent. Phone call setup may include receiving a callee number. The callee number may be received from a first client coupled with the first call agent. The callee number may be used during the setup of the phone call. The callee number may be included in the IP call setup message.

Midcall fallback setup may include assigning a DID number to the first client. Assigning a DID number may include receiving a list of DID numbers assigned to the first call agent, selecting a DID number, and assigning the selected DID number to the first client. The selected DID number may be a randomly selected DID number. The assigned DID number may be included in the IP call setup message transmitted to the second agent.

In act 2010, the VoIP call is established and maintained across the Internet. The VoIP call may include an Internet or IP computer network connection between the first call agent and the second call agent. Voice data, video data, still image data, text data, or other data may be transmitted (streamed) across the Internet connection. Establishing the VoIP call may include the second call agent transmitting an answer message to the first call agent 2010. The answer message may include a dial sequence for contacting the second call agent. Once the VoIP call is established, the first call agent may transmit data to and receive data from the first client and the second call agent may transmit data to and receive data from the second client. Once the VoIP call is established, the data may be exchanged across the Internet connection.

In act 2020, the first call agent may determine whether midcall fallback is needed. Determining whether midcall fallback is needed may include monitoring the Internet connection or information stored in memory. The first call agent may monitor one or more of the following: Internet connection characteristic, Quality of Service criteria, user input, or fallback information. In one example, the first call agent may determine that midcall fallback is appropriate when an Internet connection characteristic is greater than, equal to, or less than a predetermined Internet connection requirement. In another example, the first call agent may determine that midcall fallback is appropriate when a Quality of Service criteria is greater than, equal to, or less than a Quality of Service guarantee. In yet another example, the first call agent may determine that midcall fallback is appropriate when user input indicates that midcall fallback is appropriate. In yet another example, the first call agent may determine that midcall fallback is appropriate when fallback information, such as schedule information or usage information, indicates that midcall fallback is appropriate. In other embodiments, the second call agent determines when midcall fallback is desired.

As shown in Figure 2, the first call agent may continue to monitor the Internet connection until the first call agent determines that midcall fallback is needed ("YES"). Otherwise, the first call agent continues to monitor the Internet connection ("NO").

In act 2030, the first or second call agent may perform midcall fallback when midcall fallback is needed. Performing midcall fallback may include switching the phone call from the Internet to a PSTN. Switching the phone call may include transmitting a PSTN call setup message to the second call agent. The PSTN call setup message may be sent based on the dial sequence received from the call agent. The PSTN call setup message may include a called party number and/or a calling party number. The first call agent may ensure that the CDPN is the dial sequence received from the second call agent and the CGPN is the assigned DID, which was randomly selected and included in the IP call setup message. The first call agent may have stored the assigned DID number in memory and recalled for use in the PSTN call setup message. The second call agent may receive the PSTN call setup message having the CGPN. The second call agent may validate the PSTN call setup message using the CGPN received in the PSTN call setup message. Validating the PSTN call setup message may include comparing the DID number received in the IP call setup message to the CGPN received in the PSTN call setup message. If the DID number received in the IP call setup message matches the CGPN received in the PSTN call setup message, the PSTN call setup message is validated and a PSTN call may be established between the first client and second client. Upon establishing the PSTN call, the VoIP call may be terminated. However, if the DID numbers do not match, the PSTN call setup message is not validated and the PSTN phone call is not established. The VoIP call may continue or be terminated.

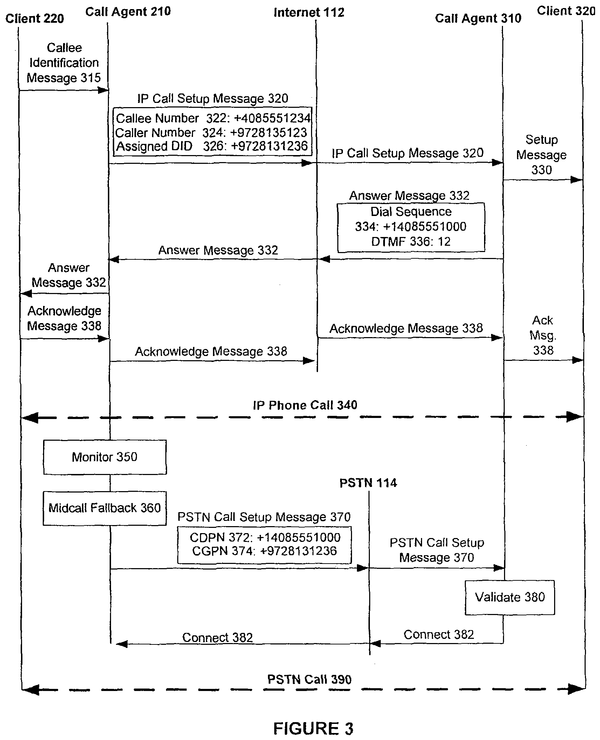

Figure 3 illustrates one embodiment of a call flow for performing midcall fallback. The client 220 may transmit a callee identification message 315 to the call agent 210. The callee identification message 315 may include a callee number (e.g., +4085551234) and/or a caller number (e.g., +9728135123). The callee number 322 may be the VoIP number of the client 320. The callee number 322 may be input by a user, for example, using a personal computer or telephone. The caller number 324 may be the VoIP number of the client 220.

The call agent 210 may select a DID 326. The DID 326 may be a randomly selected DID number. The DID 326 may be selected from a list of DID numbers assigned to the call agent 210. The call agent 210 may store the randomly selected DID number in memory and associate the DID number with client 220.

The call agent 210 may initiate a media connection across the Internet 112. The media connection may be a VoIP phone call, video-conferencing session, or other media connection. In the example of Figure 3, the media connection is a VoIP phone call. However, in other embodiments, other sessions and connections may be established. In response to receiving the callee identification message 315 and assigning a randomly selected DID 326 to the client 220, the call agent 210 may transmit an IP call setup message 320 to the call agent 310 across the Internet 112. In one embodiment, the IP call setup message 320 is a SIP INVITE message.

The IP call setup message 320 may include the callee number 322, caller number 324, and/or the DID 326. The callee number 322 and caller number 324 may be the same or different than the callee number and caller number received in the callee identification message 315. The IP call setup message 320 may be used to initiate a media connection across the Internet 112.

The call agent 310 may receive the IP call setup message 320 and begin setting up a VoIP call with the client 320 using a setup message 330. In response to the IP call setup message 320, the call agent 310 may transmit an answer message 332 to the call agent 210 across the Internet 112. The answer message 332 may include a dial sequence 334 (e.g., +14085551000) and a DTMF sequence 336 (e.g., 12). In one embodiment, the answer message 332 is an SIP 200 OK message. The answer message 332 or a similar message may be transmitted to the client 220 across the Internet and through the call agent 210. The client 220 may acknowledge the answer message 332 using an acknowledge message 338. The acknowledge message 338 may be an SIP ACK message. Once acknowledged, an IP phone call 340 may be established over the Internet 112. Other media may be established.

During the conversation, the call agent 210 may monitor 350 the Internet connection. The call agent 210 may determine whether midcall fallback is desired. If midcall fallback is not desired, the call agent 210 may maintain the IP phone call 340 and continue monitoring the Internet connection. If midcall fallback is desired, the call agent 210 may perform midcall fallback 360, which may include sending a PSTN call setup message 370 to the call agent 310. The PSTN call setup message 370 may include a called party number 372 (CDPN 372) and/or a calling party number 374 (CGPN 374). The CDPN 372 may be the dial sequence 334. The CGPN 374 may be the assigned DID 326. The call agent 310 may validate 380 the PSTN call setup message 370 using the CGPN 374 and assigned DID 326. Validation may include comparing the assigned DID 326, which was sent in the IP call setup message 320 and stored in memory, to the CGPN 374, which was sent in the PSTN call setup message 370. The PSTN call setup message 370 is validated when the assigned DID 326 matches the CGPN 374. Once validated, a PSTN call 390 may be established between the client 220 and client 320 by transmitting one or more connect messages 382 between the call agent 210 and call agent 310. The IP phone call 340 may be terminated. However, if the PSTN call setup message 370 is not validated, the PSTN call 390 is not established. The IP phone call 340 may be terminated or maintained. In other embodiments, a PSTN call is set up based on stored numbers without the comparisons.

In one embodiment, in the event that the PSTN call setup message 370 is not validated using the dial sequence 334 and CDPN 372, the call agent 310 may perform backup validation. Backup validation includes comparing the DTMF sequence 336 sent in the answer message 332 to a backup code sent over the PSTN channel once established. The backup code may be sent using DTMF, or it may be sent using modem tones, or it may be sent using any current or future mechanism suitable for transmitting information over a PSTN channel. The backup code may be sent from the call agent 210 to the call agent 310. In the event that the backup code matches the DTMF sequence 336, the call setup message 370 may be validated and the PSTN call may be established.

While the invention has been described above by reference to various embodiments, it should be understood that many changes and modifications can be made without departing from the scope of the invention. It is therefore intended that the foregoing detailed description be regarded as illustrative rather than limiting, and that it be understood that it is the following claims, including all equivalents, that are intended to define the scope of this invention.

## Claims

1. A method for performing midcall fallback, the method comprising,
assigning a direct inward dialing, DID, number to a first client (220), wherein the DID number uniquely represents a first client and is selected from a list of direct inward dialing numbers;
establishing a VoIP phone call between the first client (220) and a second client (320);
sending the DID number representing the first client to a second client over the VoIP phone call;
determining, via a processor of a call agent, that mid-call fallback should be performed based on a quality of the VoIP phone call; and
performing midcall fall back by establishing a public switched telephone network, PSTN, phone call between the first client and the second client using the DID number.

2. The method as claimed in claim 1, wherein performing midcall fallback includes transmitting a called party number, CDPN, and a calling party number, CGPN.

3. The method as claimed in claim 2, further comprising comparing the DID number to the CGPN to validate the PSTN phone call.

4. The method as claimed in claim 1, further comprising terminating the VoIP phone call once the PSTN phone call is established between the first client (220) and the second (320) client.

5. The method as claimed in claim 1, wherein determining that mid-call fallback should be performed includes monitoring an Internet connection and determining a connection quality value of the Internet connection.

6. The method as claimed in claim 5, wherein the quality value is a predetermined connection quality requirement stored in memory.

7. The method as claimed in claim 1, further comprising receiving a dial sequence identifying a call agent serving the second client, the dial sequence defining a phone number to be dialed to reach the call agent, wherein receiving the dial sequence includes receiving a second parameter, the second parameter being a value that can be sent over a PSTN connection, for example wherein the second parameter is a digit sequence, and the digit sequence is transmitted using Dual-Tone Multi-Frequency, DTMF.

8. A call agent (210, 310) comprising:
a processor operable to execute instructions; and
a memory coupled with the processor, the memory storing instructions that may be executed to perform the method according to any of claims 1 to 7.

9. The call agent as claimed in claim 8, wherein the memory further stores instructions that may be executed to compare the calling party number to the direct inward dialing number and validate the calling party number when the calling party number matches the direct inward dialing number.

10. The call agent as claimed in claim 9, wherein the memory further stores instructions that may be executed to perform midcall fallback when the calling party number matches the direct inward dialing number.

11. The call agent as claimed in claim 9, wherein the memory further stores instructions that may be executed to perform backup validation when the calling party number does not match the direct inward dialing number.

12. The call agent as claimed in claim 11, wherein sending a second parameter, the second parameter being a digit sequence that can be sent over a PSTN connection.

13. The call agent as claimed in claim 12, wherein the digit sequence is transmitted using Dual-Tone Multi-Frequency, DTMF, optionally wherein the memory further stores instructions that may be executed to send dial sequence identifying a call agent serving the second client, the dial sequence defining a phone number to be dialed to reach the call agent.

14. Logic encoded in one or more tangible media for execution and when executed operable to perform a method according to any of claims 1 to 7.

15. The logic of claim 14, wherein the logic is executable to one of: transmit a setup message including a called party number, CDPN, and a calling party number, CGPN; and compare the DID number to the CGPN;
optionally wherein the DID number is a randomly selected DID number, for example wherein the logic is executable to terminate the VoIP phone call once the PSTN phone call is established between the first client and the second client.

## Patentansprüche

1. Verfahren zum Durchführen eines Rückfalls während eines Telefonats, wobei das Verfahren Folgendes aufweist:
Zuweisen einer Durchwahl- (DID) -nummer zu einem ersten Client (220), wobei die DID-Nummer einen ersten Client eindeutig repräsentiert und aus einer Liste von Durchwahlnummern ausgewählt wird;
Aufbauen eines VoIP-Telefonats zwischen dem ersten Client (220) und einem zweiten Client (320);
Senden der den ersten Client repräsentierenden DID-Nummer über das VoIP-Telefonat an einen zweiten Client;
Bestimmen, über einen Prozessor eines Call-Agenten, dass auf Basis einer Qualität des VoIP-Telefonats ein Rückfall während des Telefonats durchgeführt werden sollte; und
Durchführen eines Rückfalls während des Telefonats durch Aufbauen eines Telefonats im öffentlichen Telefonnetz (PSTN) zwischen dem ersten Client und dem zweiten Client unter Verwendung der DID-Nummer.

2. Verfahren nach Anspruch 1, wobei das Durchführen eines Rückfalls während des Telefonats das Übertragen der Nummer eines angerufenen Teilnehmers (CDPN) und einer Nummer eines anrufenden Teilnehmers (CGPN) beinhaltet.

3. Verfahren nach Anspruch 2, das ferner das Vergleichen der DID-Nummer mit der CGPN zum Überprüfen des PSTN-Telefonats aufweist.

4. Verfahren nach Anspruch 1, das ferner das Beenden des VoIP-Telefonats, sobald das PSTN-Telefonat zwischen dem ersten Client (220) und dem zweiten (320) Client aufgebaut worden ist, aufweist.

5. Verfahren nach Anspruch 1, wobei das Bestimmen, dass ein Rückfall während eines Telefonats durchgeführt werden sollte, das Überwachen einer Internetverbindung und das Bestimmen eines Verbindungsqualitätswerts der Internetverbindung beinhaltet.

6. Verfahren nach Anspruch 5, wobei der Qualitätswert eine im Speicher gespeicherte vorbestimmte Verbindungsqualitätsanforderung ist.

7. Verfahren nach Anspruch 1, das ferner das Empfangen einer Rufsequenz aufweist, die einen dem zweiten Client dienenden Call-Agenten identifiziert, wobei die Rufsequenz eine Telefonnummer definiert, die zum Erreichen des Call-Agenten zu wählen ist, wobei das Empfangen der Rufsequenz das Empfangen eines zweiten Parameters beinhaltet, wobei der zweite Parameter ein Wert ist, der über eine PSTN-Verbindung gesendet werden kann, zum Beispiel wobei der zweite Parameter eine Ziffernfolge ist und die Ziffernfolge unter Verwendung des Mehrfrequenzwahlverfahrens (DTMF) übertragen wird.

8. Call-Agent (210, 310), umfassend:
einen Prozessor, der zum Ausführen von Anweisungen funktionsfähig ist; und
einen Speicher, der mit dem Prozessor gekoppelt ist, wobei der Speicher Anweisungen speichert, die zum Durchführen des Verfahrens nach einem der Ansprüche 1 bis 7 ausgeführt werden können.

9. Call-Agent nach Anspruch 8, wobei der Speicher ferner Anweisungen speichert, die ausgeführt werden können zum Vergleichen der Nummer des anrufenden Teilnehmers mit der Durchwahlnummer und zum Überprüfen der Nummer des anrufenden Teilnehmers, wenn die Nummer des anrufenden Teilnehmers mit der Durchwahlnummer übereinstimmt.

10. Call-Agent nach Anspruch 9, wobei der Speicher ferner Anweisungen speichert, die ausgeführt werden können zum Durchführen eines Rückfalls während des Telefonats, wenn die Nummer des anrufenden Teilnehmers mit der Durchwahlnummer übereinstimmt.

11. Call-Agent nach Anspruch 9, wobei der Speicher ferner Anweisungen speichert, die ausgeführt werden können, um eine Sicherungsüberprüfung durchzuführen, wenn die Nummer des anrufenden Teilnehmers nicht mit der Durchwahlnummer übereinstimmt.

12. Call-Agent nach Anspruch 11, wobei bem Senden eines zweiten Parameters der zweite Parameter eine Ziffernfolge ist, die über eine PSTN-Verbindung gesendet werden kann.

13. Call-Agent nach Anspruch 12, wobei die Ziffernfolge unter Verwendung des Mehrfrequenzwahlverfahrens (DTMF) übertragen wird, wahlweise wobei der Speicher ferner Anweisungen speichert, die ausgeführt werden können, um eine Rufsequenz zu senden, die einen Call-Agent identifiziert, der dem zweiten Client dient, wobei die Rufsequenz eine Telefonnummer definiert, die zum Erreichen des Call-Agenten zu wählen ist.

14. Logik, die in einem oder mehr nichtflüchtigen Medien zur Ausführung codiert ist und bei Ausführung zum Durchführen eines Verfahrens nach einem der Ansprüche 1 bis 7 funktionsfähig ist.

15. Logik nach Anspruch 14, wobei die Logik für eines der Folgenden ausführbar ist: Übertragen einer Setup-Nachricht, die eine Nummer eines angerufenen Teilnehmers (CDPN) und eine Nummer eines anrufenden Teilnehmers (CGPN) beinhaltet, und Vergleichen der DID-Nummer mit der CGPN;
wahlweise wobei die DID-Nummer eine zufällig ausgewählte DID-Nummer ist, zum Beispiel wobei die Logik ausführbar ist, um das VoIP-Telefonat zu beenden, sobald das PSTN-Telefonat zwischen dem ersten Client und dem zweiten Client aufgebaut worden ist.

## Revendications

1. Procédé de réalisation d'une reprise à mi-appel, le procédé consistant à :
attribuer un numéro de sélection directe à l'arrivée (SDA) à un premier client (220), le numéro SDA représentant uniquement un premier client et étant choisi dans une liste de numéros de sélection directe à l'arrivée ;
établir un appel téléphonique VoIP entre le premier client (220) et un second client (320) ;
envoyer le numéro SDA représentant le premier client à un second client sur l'appel téléphonique VoIP ;
déterminer, par l'intermédiaire d'un processeur d'un agent d'appel, qu'une reprise à mi-appel doit être réalisée sur la base d'une qualité de l'appel téléphonique VoIP ; et
réaliser une reprise à mi-appel en établissant un appel téléphonique de réseau téléphonique public commuté (RTPC) entre le premier client et le second client en utilisant le numéro SDA.

2. Procédé selon la revendication 1, dans lequel la réalisation d'une reprise à mi-appel consiste à transmettre un numéro demandé (CDPN) et un numéro demandeur (CGPN).

3. Procédé selon la revendication 2, consistant en outre à comparer le numéro SDA au CGPN afin de valider l'appel téléphonique RTPC.

4. Procédé selon la revendication 1, consistant en outre à terminer l'appel téléphonique VoIP une fois l'appel RTPC établi entre le premier client (220) et le second client (320).

5. Procédé selon la revendication 1, dans lequel la détermination que la reprise à mi-appel doit être réalisée consiste à surveiller une connexion Internet et déterminer une valeur de qualité de connexion de la connexion Internet.

6. Procédé selon la revendication 5, dans lequel la valeur de qualité est une exigence de qualité de connexion prédéterminée stockée en mémoire.

7. Procédé selon la revendication 1, consistant en outre à recevoir une séquence de composition identifiant un agent d'appel desservant le second client, la séquence de composition définissant un numéro de téléphone à composant pour atteindre l'agent d'appel, la réception de la séquence de composition consistant à recevoir un second paramètre, le second paramètre étant une valeur qui peut être envoyée sur une connexion RTPC, le second paramètre étant par exemple une séquence de chiffres, et la séquence de chiffres étant transmise au moyen d'une multifréquence bitonale (DTMF).

8. Agent d'appel (210, 310), comprenant :
un processeur permettant d'exécuter des instructions ; et
une mémoire couplée au processeur, la mémoire stockant des instructions qui peuvent être exécutées pour réaliser le procédé selon l'une quelconque des revendications 1 à 7.

9. Agent d'appel selon la revendication 8, dans lequel la mémoire stocke en outre des instructions qui peuvent être exécutées pour comparer le numéro demandeur au numéro de sélection directe à l'arrivée et valider le numéro demandeur quand le numéro demandeur coïncide avec le numéro de sélection directe à l'arrivée.

10. Agent d'appel selon la revendication 9, dans lequel la mémoire stocke en outre des instructions qui peuvent être exécutées pour réaliser une reprise à mi-appel quand le numéro demandeur coïncide avec le numéro de sélection directe à l'arrivée.

11. Agent d'appel selon la revendication 9, dans lequel la mémoire stocke en outre des instructions qui peuvent être exécutées pour réaliser une validation de secours quand le numéro demandeur ne coïncide pas avec le numéro de sélection directe à l'arrivée.

12. Agent d'appel selon la revendication 11, permettant l'envoi d'un second paramètre, le second paramètre étant une séquence de chiffres pouvant être envoyée sur une connexion RTPC.

13. Agent d'appel selon la revendication 12, dans lequel la séquence de chiffres est transmise au moyen d'une multifréquence bitonale (DTMF), éventuellement dans lequel la mémoire stocke en outre des instructions qui peuvent être exécutées pour envoyer une séquence de composition identifiant un agent d'appel desservant le second client, la séquence de composition définissant un numéro de téléphone à composer pour atteindre l'agent d'appel.

14. Logique codée sur un ou plusieurs supports tangibles, destinée à être exécutée, et, lorsqu'elle est exécutée, permettant de réaliser un procédé selon l'une quelconque des revendications 1 à 7.

15. Logique selon la revendication 14, la logique pouvant être exécutée pour : transmettre un message de configuration comprenant un numéro demandé (CDPN) et un numéro demandeur (CGPN) ; ou comparer le numéro SDA au CGPN ;
le numéro SDA étant éventuellement un numéro SDA sélectionné aléatoirement, par exemple la logique pouvant être exécutée pour terminer l'appel téléphonique VoIP une fois l'appel téléphonique RTPC établi entre le premier client et le second client.
